# EUROPÄISCHE PATENTSCHRIFT

(11) **EP 2 415 657 B1**
(45) Veröffentlichungstag und Bekanntmachung des Hinweises auf die Patenterteilung: **20.01.2016**
(21) Anmeldenummer: 11169759.5
(22) Anmeldetag: 14.06.2011
(51) Int. Cl.: B62J 1/08, B62J 1/02

(54) **Sattelstütze**
Saddle support
Support de selle

(30) Priorität: 05.08.2010 DE 202010011100 U
(43) Veröffentlichungstag der Anmeldung: 08.02.2012
(73) Patentinhaber: Canyon Bicycles GmbH, 56073 Koblenz (DE)
(72) Erfinder: Kaiser, Michael, 56073 Koblenz (DE)
(74) Vertreter: von Kreisler Selting Werner - Partnerschaft von Patentanwälten und Rechtsanwälten mbB

(56) Entgegenhaltungen:
- EP-A2- 1 864 893
- WO-A1-03/066418
- WO-A1-2004/007269
- DE-A1- 4 404 686
- DE-U1- 20 310 170
- DE-U1-202007 015 382

## Beschreibung

Die Erfindung betrifft eine Sattelstütze für Fahrradsättel, wobei die Sattelstütze insbesondere für Trekking- und Rennräder geeignet ist.

Beim Fahrradfahren bewirken bereits geringe Unebenheiten im Fahrbahnbelag eine erhebliche Belastung des Fahrers, insbesondere dessen Rückrads, der Rückenmuskulatur etc. Um diese Belastungen zu verringern sind Fahrräder mit Hinterradfederung bekannt. Derartige Rahmenkonstruktionen sind jedoch schwer und aufwändig, sodass Fahrräder mit gefedertem Hinterbau nur bei Mountainbikes oder Trekkinrädern verwirklicht sind. Für Sporträder wie Rennräder, Triathlonräder und dergleichen ist das Vorsehen gefederter Hinterbauten bereits aufgrund ihres Gewichtes nicht geeignet. Ferner sind gefederte oder gedämpfte Sattelstützen bekannt. Diese sind jedoch auch schwer und daher für den Einsatz bei Sporträdern wie Rennrädern nicht von Interesse.

Aus EP 1 476 346 ist eine Sattelstütze bekannt, die ein Kopfelement zur Verbindung mit einem Sattelelement wie einem Sattelgestell aufweist. Mit dem Kopfelement sind zwei Streben verbunden. Diese, in einem Abstand zueinander angeordneten Streben sind aus flexiblem Kunststoffmaterial hergestellt. Im rahmenseitigen Endbereich der Streben ist zwischen den Streben ein, den Abstand zwischen den Streben ausfüllendes Verbindungselement vorgesehen.

DE 203 10 170 U offenbart eine Sattelstütze gemäß dem Oberbegriff von Anspruch 1.

Dieses Verbindungselement ist zwingend erforderlich, da der rahmenseitige Endbereich der Streben in die Öffnung des Sattelrohrs eingesteckt und in dieses durch eine Sattelschelle klemmend gehalten wird. Durch das Vorsehen zweier flexibler Streben ist der Fahrkomfort verbessert. Allerdings weist die in EP 1 476 346 beschriebene Sattelstütze eine geringe Torsionssteifigkeit auf. Eine zu geringe Torsionssteifigkeit der Sattelstütze verschlechtert das Handling des Fahrrads.

Aufgabe der Erfindung ist es, eine Sattelstütze für Fahrradsättel, insbesondere für Rennräder zu schaffen, die, bei einer den Komfort verbessernden Flexibilität, eine ausreichende Torsionssteifigkeit aufweist.

Die Lösung der Aufgabe erfolgt erfindungsgemäß durch die Merkmale des Anspruchs 1.

Die erfindungsgemäße Sattelstütze für Fahrradsättel, die insbesondere für Rennräder geeignet ist, weist ein Kopfelement zur Verbindung mit einem Sattelelement wie einem den Sattel tragenden Sattelgestellt auf. Mit dem Kopfelement sind mindestens zwei, vorzugsweise genau zwei Streben verbunden. Die insbesondere stabförmigen Streben sind in ihrem rahmenseitigen Endbereich mit dem Sattelrohr des Fahrradrahmens verbindbar. Die Verbindung erfolgt vorzugsweise, wie bei herkömmlichen Sattelstützen, durch Einstecken des Endbereichs der Sattelstütze in die Öffnung des Sattelrohrs und insbesondere klemmendes Fixieren der Sattelstütze mittels einer Sattelklemme. Erfindungsgemäß sind die Streben in ihrem rahmenseitigen Endbereich als Hohlprofile ausgebildet. Die insbesondere über ihre gesamte Länge als gesonderte Streben ausgebildeten Streben weisen aufgrund der Ausbildung zumindest in ihrem rahmenseitigen Endbereich als Hohlprofil eine ausreichende, insbesondere gegenüber der in EP 1 476 346 beschriebenen Sattelstütze verbesserte Torsionssteifigkeit auf.

Mit der erfindungsgemäßen Ausgestaltung der Sattelstütze aus mindestens zwei, insbesondere in Längsrichtung gegeneinander verschiebbaren Streben, die in ihrem rahmenseitigen Endbereich als Hohlprofile ausgebildet sind, kann somit einerseits eine Erhöhung der Flexibilität der Sattelstütze gegenüber einteiligen Sattelstützen erzielt werden, wobei gleichzeitig eine zufriedenstellende Torsionssteifigkeit erhalten bleibt.

Erfindungsgemäß sind die Streben derart ausgebildet, dass sie im rahmenseitigen Endbereich aneinander anliegen. Hierdurch ist vorzugsweise eine Kontaktfläche zwischen den vorzugsweise zwei Streben ausgebildet. Ferner ist es bevorzugt, dass die Sattelstreben einen gemeinsamen Querschnitt aufweisen, der einer Querschnittsöffnung des Sattelrohrs entspricht. Dies hat den Vorteil, dass der Endbereich der Streben in die Öffnung des Sattelrohrs eingeführt und insbesondere über eine Sattelschelle klemmend fixiert werden kann. Hierbei ist es nicht erforderlich, zwischen den beiden Streben ein Verbindungselement vorzusehen, um einen Abstand zwischen den Streben auszufüllen. Da die Streben in bevorzugter Ausführungsform der Erfindung aneinander anliegen und einen gemeinsamen Querschnitt aufweisen, der der Querschnittsöffnung des Sattelrohrs entspricht, ist eine einfache Montage der Sattelstütze im Sattelrohr ermöglicht. Der gemeinsame Querschnitt der Sattelstütze im rahmenseitigen Endbereich kann hierbei, wie bei herkömmlichen Sattelstützen kreisrund ausgebildet sein. Insbesondere kann der Querschnitt auch oval oder in Fahrtrichtung nach hinten spitz zulaufend ausgebildet sein. Derartige Querschnitte sind bei aerodynamisch optimierten Fahrradrahmen vorgesehen.

Aufgrund des Vorsehens einer Kontaktfläche zwischen den vorzugsweise genau zwei Streben im rahmenseitigen Endbereich, die in bevorzugter Ausführungsform auch im mittleren Bereich der Sattelstreben vorgesehen ist, ist trotz des Vorsehens von zwei Streben eine geschlossene Form realisiert. Hierdurch ist trotz verbesserter Flexibilität eine ausreichende Torsionssteifigkeit gegeben.

Bevorzugt ist es, dass die Kontaktfläche quer zur Rahmenlängsrichtung, insbesondere über die gesamte Breite der Sattelstütze verläuft. Bei einem kreisrunden Querschnitt der Sattelstütze im rahmenseitigen Endbereich ist es daher bevorzugt, dass die beiden Streben jeweils einen im Wesentlichen halbkreisförmigen Querschnitt aufweisen. Entsprechend sind bei einem ovalen Querschnitt Streben vorgesehen, die jeweils einen halbovalen Querschnitt aufweisen. Bei einem entgegen der Fahrtrichtung sich verjüngenden Querschnitt kann eine erste, vordere Strebe einen halbkreisförmigen Querschnitt und eine zweite, hintere Strebe einen im Wesentlichen dreieckförmigen Querschnitt aufweisen, wobei die Dreiecksspitze entgegen der Fahrtrichtung weist.

In besonders bevorzugter Ausführungsform sind ein oder mehrere Kontaktflächen zwischen den vorzugsweise zwei Streben konvex gewölbt ausgebildet. Bei der bevorzugten Ausführungsform, bei der genau zwei Streben vorgesehen sind, sind die beiden inneren, aufeinander zugerichteten Flächen, die die Kontaktfläche ausbilden, somit jeweils aufeinander zu konvex gewölbt. Dies hat zur Folge, dass, sobald sich die beiden Flächen berühren, zunächst lediglich eine linienförmige Berührung erfolgt. Beim Zusammendrücken der beiden Streben aufeinander zu, im Bereich der Klemmung in dem Sattelrohr, erfolgt vorzugsweise eine Verformung der Innenwände der Hohlprofile, sodass die linienförmige Berührung in eine flächige Berührung umgewandelt wird. Aufgrund der hierbei auftretenden elastischen Verformung der Innenwand der Hohlprofile erfolgt eine Vorspannung. Hierdurch ist die Anpresskraft zwischen den beiden, die Kontaktfläche ausbildenden Flächen vergrößert, sodass eine höhere Klemmkraft entsteht und das Fixieren der erfindungsgemäßen Sattelstütze im Sattelrohr des Fahrradrahmens verbessert ist.

In besonders bevorzugter Ausführungsform ist die Wölbung nicht über die gesamte Kontaktfläche in Längsrichtung vorgesehen. Vielmehr sind vorzugsweise die Innenseiten der Streben, die die Kontaktfläche ausbilden, in dem unteren rahmenseitigen Endbereich der Streben flach ausgebildet. Es handelt sich hierbei um den unteren Bereich, der zuerst in das Sattelrohr des Rahmens eingeführt wird, wobei eine flache Ausgestaltung der Innenflächen über vorzugsweise 10 bis 30 mm erfolgt. Dies hat den erheblichen Vorteil, dass die insbesondere zwei Streben nicht zusammengedrückt werden müssen, um bereits beim Einführen der Sattelstreben in die Öffnung des Sattelrohrs ein Verformen der Innenwände zu bewirken.

Vorzugsweise weisen die Streben sowohl im Endbereich als auch im Mittelbereich, das heißt über insgesamt im Wesentlichen die unteren 2/3 der Gesamtlänge der Sattelstütze, denselben Querschnitt auf. Insbesondere sind die Streben sowohl im Endbereich als auch im mittleren Bereich als Hohlprofile ausgebildet, wobei es besonders bevorzugt ist, dass die Streben über ihre gesamte Länge, das heißt bis zum sattelseitigen Ende, an dem die Verbindung mit dem Kopfelement erfolgt, als Hohlprofil ausgebildet sind. Insbesondere ist der Querschnitt der Streben möglichst gut an dem Biegemomentenverlauf angepasst. Hierdurch kann eine Vergleichmäßigung der Beanspruchung im Bauteil erzielt werden.

Da in bevorzugter Ausführungsform die Flexibilität der Streben, ausgehend vom rahmenseitigen Ende, zunehmen soll, ist der sattelseitige Endbereich in einer bevorzugten Ausführungsform zumindest bei einer Strebe, insbesondere bei allen Streben derart ausgebildet, dass sich der Querschnitt bzw. die Querschnittsfläche verringert. Die Verringerung des Querschnitts erfolgt hierbei vorzugsweise stufenfrei und insbesondere kontinuierlich. Bei der besonders bevorzugten Ausführungsform, bei der genau zwei Streben vorgesehen sind, sind diese insbesondere identisch ausgebildet. Vorzugsweise erfolgt eine Verringerung der Querschnitte derart, dass die Streben eine Breite quer zur Rahmenlängsrichtung aufweisen, die über ihre gesamte Länge im Wesentlichen konstant ist. Die Querschnittsverringerung im sattelseitigen Endbereich erfolgt somit vorzugsweise ausschließlich durch Verringern der Breite der Strebe in Rahmenlängsrichtung. Hierdurch ist wiederrum die Flexibilität im sattelseitigen Endbereich erhöht, wobei die Torsionssteifigkeit erhalten bleibt oder zumindest eine gewünschte Reststeifigkeit verbleibt.

Vorzugsweise ist insbesondere aufgrund der Verjüngung der Streben im sattelseitigen Endbereich zwischen den insbesondere zwei Streben ein Schlitz vorgesehen. Dieser erweitert sich vorzugsweise in Richtung des Kopfelements, sodass in Seitenansicht ein insbesondere V-förmiger Schlitz vorgesehen ist. Die Kontaktflächen zwischen insbesondere zwei Streben, die sich vorzugsweise quer zur Rahmenlängsrichtung erstrecken, liegen somit im rahmenseitigen Endbereich sowie im mittleren Bereich der Sattelstütze aneinander an und werden sodann im oberen bzw. sattelseitigen Endbereich auseinander geführt, sodass der Schlitz entsteht.

In besonders bevorzugter Ausführungsform sind die Streben derart ausgebildet, dass ausgehend vom sattelseitigen Ende zum rahmenseitigen Ende der Streben eine möglichst gleichmäßige Beanspruchung der Streben realisiert werden kann. Dies ist insbesondere aufgrund einer kontinuierlichen Querschnittsveränderung im sattelseitigen Endbereich möglich. Der Biegemomentenverlauf kann ferner durch die Materialwahl und die Variierung der Wandstärke beeinflusst werden.

In besonders bevorzugter Ausführungsform variiert die Wandstärke der Streben und/oder es werden unterschiedliche Materialien und/oder Ausrichtungen der Fasern vorgenommen, um eine weitere Vergleichmäßigung der Belastung der Streben zu realisieren.

Hierbei ist es besonders bevorzugt, dass die Wandstärke im rahmenseitigen Endbereich der Streben in Richtung des mittleren Bereichs zunimmt. Besonders bevorzugt ist es hierbei, dass die Wandstärke von ca. 1 mm kontinuierlich auf ca. 2 mm zunimmt. Die Zunahme erfolgt hierbei vorzugsweise über eine Länge von 50 bis 70 mm. Ferner ist es bevorzugt, dass die Wandstärke im mittleren Bereich in Richtung des sattelstützseitigen Endbereichs abnimmt. Hierbei erfolgt vorzugsweise eine Abnahme von ca. 2 mm auf ca. 1 mm über eine sich an den rahmenseitigen Endbereich anschließende Länge von 100 bis 140 mm. Des Weiteren ist es bevorzugt, dass die Wandstärke der Hohlprofile im sattelstützseitigen Endbereich konstant ist.

Die Kontaktfläche zwischen den insbesondere zwei Streben ist zumindest in Teilbereichen derart ausgebildet, dass eine den Reibwert vergrößernde Oberfläche vorgesehen ist. Hierdurch kann ein Verschieben der Streben in Längsrichtung, das nicht oder nur in geringen Grenzen erwünscht ist, reduziert werden. Eine Vergrößerung des Reibwerts der Oberfläche der Kontaktflächen kann beispielsweise durch Aufrauen oder Beschichten erfolgen. Ebenso können die Oberflächenreibelemente aus hartem Material eingebracht werden. Ferner ist es möglich, zwischen den Streben zur Erhöhung der Reibung ein Zwischenelement vorzusehen, dass an den Kontaktflächen anliegt. Hierbei kann es sich um eine dünne Platte mit entsprechend rauen Oberflächen handeln.

Die Streben der Sattelstütze sind vorzugsweise aus Faserverbundwerkstoff hergestellt. Hierbei verlaufen die Fasern vorzugsweise in Längsrichtung der Streben. Durch die Faserwahl oder gegebenenfalls der Kombination unterschiedlicher Faserarten und/oder Faserdicken kann die Belastung der Streben aufgrund des auftretenden Biegemomentenverlauf vergleichmäßigt werden.

Die vorzugsweise über ihre gesamte Länge als Hohlprofil ausgebildeten Streben können zumindest teilweise mit Material geringerer Dichte gefüllt sein. Hierdurch kann in Abhängigkeit des auftretenden Biegemomentenverlaufs eine weitere Vergleichmäßigung der Belastung der Streben realisiert werden. Das Material weist hierbei, verglichen mit dem Material aus dem die Streben selbst hergestellt sind, eine geringere Dichte auf. Beispielsweise handelt es sich hierbei um aufgeschäumtes Kunststoffmaterial, Wabenstrukturen und dergleichen.

Durch die unterschiedliche Ausgestaltung der Streben, wie die Wahl und die Anordnung der Fasern, die Wahl der Wanddicke, die Wahl und Anordnung einer Füllung im Inneren der Hohlprofile etc. können unterschiedliche Nachgiebigkeiten, das heißt unterschiedlicher Federungskomfort realisiert werden. Hierdurch ist es möglich, unterschiedliche Sattelstützen für unterschiedliche Einsatzgebiete gemäß den Vorlieben des Fahrradfahrers und ein Variieren des Fahrradgewichts etc. anzubieten.

Die Verbindung der Streben mit dem Kopfteil erfolgt vorzugsweise derart, dass zumindest eine Strebe am sattelseitigen Ende eine Verdickung aufweist. Bei der bevorzugten Ausführungsform, in der zwei Streben vorgesehen sind, weisen beide Streben eine Verdickung auf. Die Verdickung dient zur Aufnahme insbesondere jeweils eines Kopfteils des Kopfelements. Hierbei ist es bevorzugt, dass sich die Verdickung, ausgehend von einer Mittelebene der Sattelstütze, nach vorne bzw. hinten erstreckt.

Der innere Bereich zwischen den insbesondere zwei Streben, in dem in bevorzugter Ausführungsform der Schlitz vorgesehen ist, ist somit durchgehend eben ausgestaltet. In besonders bevorzugter Ausführungsform ist die Verdickung einstückig mit der Strebe ausgebildet und somit vorzugsweise insbesondere aus Faserverbundwerkstoff hergestellt. Vorzugsweise weist die Verdickung eine quer zur Rahmenlängsrichtung angeordnete Öffnung zur Aufnahme einer Schwenkachse auf. Die Schwenkachse ist hierbei in der Öffnung vorzugsweise frei schwenkbar. Über die Schwenkachse können somit auf die Strebe keine oder allenfalls nur geringe Momente übertragen werden. Dies hat den Vorteil, dass die Verdickung und somit der sattelseitige Endbereich der Streben keinen zu großen Momenten ausgesetzt ist, sodass auch bei dünner und somit leichter Bauweise der Streben, die für die Sicherheit erforderliche Festigkeit und Stabilität realisiert ist. Bei der bevorzugten Ausführungsform der Sattelstütze mit zwei Streben sind somit zwei vorzugsweise zueinander parallel verlaufende Schwenkachsen vorgesehen.

Die Kopfteile weisen vorzugweise zur Verbindung mit einem Sattelelement, wie einem rohrförmigen Sattelgestell, Fixierelemente auf. Über die Fixierelemente erfolgt vorzugsweise ein Klemmen des zu befestigenden Sattelgestells. Bevorzugt ist hierbei, dass je Kopfelement zwei Fixierelemente vorgesehen sind. Diese sind vorzugsweise ausschließlich mit der Schwenkachse verbunden und jeweils seitlich neben den Verdickungen angeordnet.

Ferner betrifft die Erfindung einen Fahrradrahmen, insbesondere einen Rennradrahmen. Dieser weist wie üblich ein Oberrohr, ein Unterrohr sowie ein Sattelrohr auf. Hierbei können das Unterrohr sowie das Sattelrohr beispielsweise mit einer Tretlageraufnahme verbunden sein. Die Verbindung zwischen Unterrohr und Oberrohr erfolgt üblicher Weise über ein Gabelrohr zur Gabelaufnahme.

Erfindungsgemäß geht das Sattelrohr in eine Sattelstütze über, sodass ein klemmendes Fixieren der Sattelstütze über eine Sattelschelle nicht erforderlich ist. Derartig ausgebildete Fahrradrahmen sind insbesondere bei extrem leichten Rennrädern bekannt. Erfindungsgemäß weist die Sattelstütze wiederrum mindestens zwei Streben auf.

Diese sind mit einem Kopfelement zum Verbinden mit einem Sattelelement wie einem Sattelgestell verbunden. Die Sattelstreben sind wiederrum in ihrem rahmenseitigen Endbereich, das heißt in dem Übergangsbereich zwischen Sattelrohr und Streben als Hohlprofil ausgebildet. Vorzugsweise sind auch diese einstückig mit dem Sattelrohr verbundenen Streben der Sattelstütze, wie vorstehend beschrieben, bevorzugt weitergebildet.

Die Anpassung der Sattelhöhe kann hierbei dadurch erfolgen, dass die Sattelstreben gekürzt und anschließend mit einem Kopfelement verbunden werden. Insofern ist es bei dieser einstückigen Ausführungsform der Erfindung bevorzugt, dass die Streben über Ihre gesamte Länge, wie vorstehend beschrieben, bevorzugt ausgebildet sind, um eine möglichst konstante Belastung der Streben zu ermöglichen. Es ist bei der einstückigen Ausführungsform nicht unbedingt erforderlich, dass die Streben über einen unteren, insbesondere dem rahmenseitigen Endbereich sowie über einen mittleren Bereich einen konstanten Außenquerschnitt aufweisen, da die einstückige Sattelstütze nicht in ihrer Höhe durch Verschieben in dem Sattelrohr variiert werden kann.

Nachfolgend wird die Erfindung anhand bevorzugter Ausführungsform und unter Bezugnahme auf die anliegenden Zeichnungen näher erläutert.

Es zeigen:
- Fig. 1: eine schematische Seitenansicht der erfindungsgemäßen Sattelstütze ohne Kopfelement,
- Fig. 2: eine schematische Schnittansicht des rahmenseitigen Endbereichs der Streben entlang der Linie II-II und
- Fig. 3: eine schematische Schnittansicht des sattelseitigen Endbereichs der Streben entlang der Linie III-III,
- Fig. 4: eine alternative Querschnittsform zu der in Fig. 2 dargestellten Querschnittsform,
- Fig. 5: eine schematische Seitenansicht der Sattelstütze im eingebauten Zustand,
- Fig. 6: eine schematische Vorderansicht der Sattelstütze in Richtung des Pfeils VI in Fig. 5 im nicht eingebauten Zustand und
- Fig. 7: eine schematische perspektivische Explosionszeichnung des sattelseitigen Endbereichs der Sattelstütze mit einer weiteren bevorzugten Ausführungsform des Kopfelements.

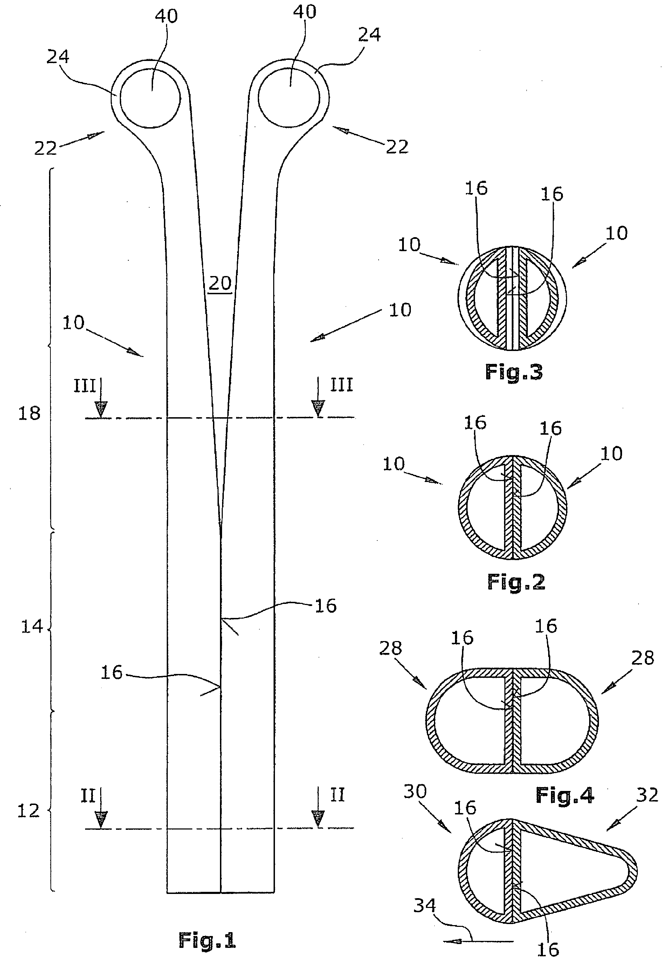

Die in Fig. 1 dargestellte erfindungsgemäße Sattelstütze weist zwei Streben 10 auf, die vorzugsweise über ihre gesamte Länge als Hohlprofil ausgebildet sind. Insbesondere in einem Endbereich 12, bei dem es sich ca. um das untere Drittel der Streben 10 handelt, sind die Streben als Hohlprofil ausgebildet. Im dargestellten Ausführungsbeispiel handelt es sich um zwei identisch ausgebildete Streben 10, die im Endbereich 12 einen halbkreisförmigen Querschnitt (Fig. 2) aufweisen. Im rahmenseitigen Endbereich 12 sowie vorzugsweise über die gesamte Länge weisen die Streben 10 eine konstante Wandstärke auf. Im rahmenseitigen Endbereich 12 sowie in einem mittleren Bereich 14 ist der Querschnitt der Streben 10 vorzugsweise derart ausgebildet, dass dieser im Wesentlichen unverändert, wie in Fig. 2 dargestellt, bleibt. Hierdurch ist im rahmenseitigen Endbereich 12 sowie in der dargestellten Ausführungsform auch im mittleren Bereich 14 zwischen den beiden Streben eine Kontaktfläche 16 ausgebildet, bei der es sich um die einander gegenüberliegenden Innenseiten der halbringförmigen Streben 10 (Fig. 2) handelt. Bei einer bevorzugten Ausführungsform sind die beiden Innenseiten, die die Kontaktfläche 16 ausbilden, konvex, das heißt aufeinander zu gewölbt, sodass sich die Streben, wenn sie nicht in das Sattelrohr geklemmt sind, linienförmig berühren.

Vorzugsweise ist hierbei in dem in Fig. 1 unteren Bereich ein flächiger Kontakt realisiert, um das Einführen der Sattelstütze in das Sattelrohr zu vereinfachen.

In einem sattelseitigen Endbereich 18 der beiden Streben 10 weisen diese einen sich verjüngenden Querschnitt auf (Fig. 3). Die beiden Innenseiten 16 bilden somit keine Kontaktfläche mehr aus. Vielmehr ist in Seitenansicht zwischen den beiden Streben 10 ein Schlitz 20 ausgebildet, der in Seitenansicht (Fig. 1) V-förmig ist.

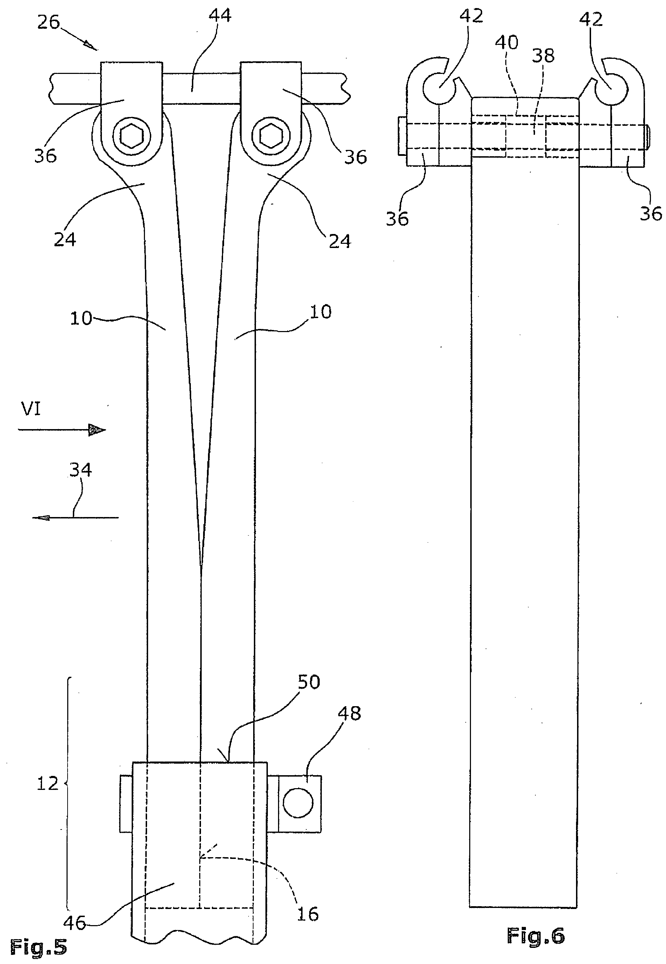

Die sich an den sattelseitigen Endbereich anschließenden Enden 22 der Streben 10 sind im dargestellten Ausführungsbeispiel jeweils einstückig mit den Streben ausgebildet und weisen eine Verdickung 24 auf. Diese dient zur Verbindung mit dem Kopfelement 26 (Fig. 5).

Anstelle der in Fig. 2 dargestellten Ausgestaltung der Querschnitte der beiden Streben 10 können diese auch wie in Fig. 4 ausgebildet sein. Hierbei handelt es sich beispielsweise um einen insgesamt ovalen Querschnitt, sodass zwei vorzugsweise wiederum identische Streben 28 ausgebildet sind.

Diese weisen ebenfalls eine konstante Wandstärke sowie eine Kontaktfläche 16 auf. Im mittleren und insbesondere im oberen Bereich 18 erfolgt ein Verjüngen vorzugsweise beider Sattelstreben 28 wie anhand Fig. 1 beschrieben.

Auch ist insbesondere bei aerodynamisch ausgestalteten Sattelstützen das Ausgestalten zweier Streben 30, 32 möglich. Hierbei ist die Strebe 30 entsprechend der Strebe 10 als halbkreisförmige Strebe ausgebildet, die wiederum eine konstante Wandstärke aufweist. Die, bezogen auf eine Fahrtrichtung 34, hintere Strebe 32 weist einen im Wesentlichen dreieckförmigen Querschnitt auf, wobei die Spitze des Dreiecks entgegen der Fahrtrichtung 34 weist.

Beide Streben 30, 32 weisen vorzugsweise wiederum eine konstante Wandstärke auf. Auch diese Streben sind vorzugsweise derart ausgebildet, dass sie sich nach oben, insbesondere im sattelseitigen Endbereich verjüngen.

Aus fertigungstechnischen Gründen weisen die einzelnen Streben stets abgerundete Ecken auf.

Zur Verbindung der erfindungsgemäßen Sattelstütze mit einem Sattel weist das Kopfelement 26 (Fig. 5) im dargestellten Ausführungsbeispiel insgesamt vier Kopfteile 36 auf. Die Kopfteile 36 sind über eine im dargestellten Ausführungsbeispiel im Wesentlichen als Schraube ausgebildete Schwenkachse 38 mit der jeweiligen Verdickung 24 der Strebe 10 verbunden. Hierzu weist die Verdickung 24 jeweils eine Öffnung 40 auf, durch die die Schwenkachse 38 hindurchgeführt ist. Die vier Kopfteile weisen jeweils eine teilkreisförmige Öffnung 42 auf. Diese dient zur Aufnahme und klemmenden Fixierung eines rohrförmigen Elements 44 des Sattelgestells. Zum klemmenden Fixieren des Rohrelements 44 durch Verringern des Öffnungsquerschnitts 42 können die Kopfteile 36 beispielsweise zweiteilig ausgebildet sein.

Zur Erhöhung der Steifigkeit können zwei in Rahmenlängsrichtung 34 (Fig. 5) hintereinander angeordnete Kopfteile 36 auch über ein brückenartiges Element miteinander verbunden oder einstückig ausgebildet sein.

Aufgrund des Vorsehens der Kopfteile 46 in Verbindung mit den beiden zueinander parallelen Schwenkachsen 38 sind zwei Gelenke realisiert. Da um jede der beiden Schwenkachsen 38 eine der beiden Streben 10 schwenkbar ist, ist ein Verschieben der Streben 10 zueinander in Längsrichtung möglich. Dies hat ein Verändern der Sattelneigung zur Folge. Insofern ist es auf einfache Weise durch Verschieben der Streben 10 zueinander in Längsrichtung möglich, die Sattelneigung einzustellen.

Da somit innerhalb der Kopfteile nur ein Verschieben des Sattelgestells 44 in Längsrichtung erforderlich ist, kann das Kopfelement 26 gegenüber herkömmlichen Kopfelementen einfach und somit leichter ausgebildet sein.

Die Fixierung der Sattelstütze in einem Sattelrohr 46 (Fig. 5) erfolgt, wie auch bei herkömmlichen Sattelstützen üblich, über eine Sattelschelle 48. Hierzu wird zumindest ein Teil des rahmenseitigen Endbereichs 12 der beiden Streben 10 in eine Öffnung 50 des Sattelrohrs 46 eingesteckt, wobei die Öffnung 50 mit Hilfe der Sattelschelle 48 im Querschnitt verringert wird, um ein klemmendes Fixieren der beiden Streben 10 zu realisieren.

Gemäß einer weiteren, unabhängigen Ausführungsform der Erfindung kann insbesondere bei Leichtbau-Rennrädern ein Verbinden insbesondere ein einstückiges Ausbilden der Streben 10 mit dem Sattelrohr 46 erfolgen. Auch bei dieser Ausgestaltung können unterschiedliche Querschnitte, wie beispielsweise in Fig. 4 dargestellt, realisiert werden.

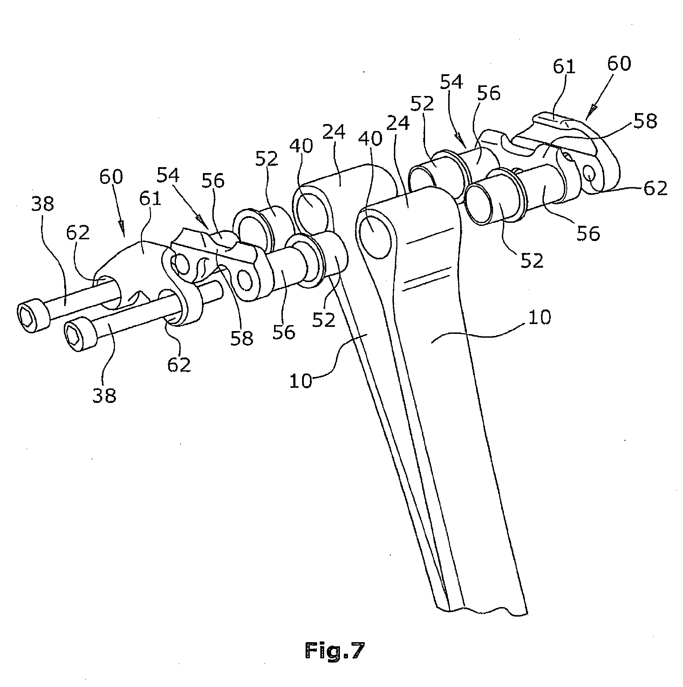

Eine weitere bevorzugte Ausführungsform des Kopfelements ist als Explosionszeichnung in Fig. 7 dargestellt, wobei ähnliche oder identische Bauteile mit denselben Bezugszeichen gekennzeichnet sind.

In den Verdickungen 24 ist jeweils die Bohrung 40 vorgesehen. In die Bohrung 40 wird zunächst im dargestellten Ausführungsbeispiel von beiden Seiten jeweils eine Hülse 52 eingesteckt. In zwei auf einer Seite der Sattelstütze angeordnete Hülsen 52 wird jeweils ein erstes Kopfteil 54 eingesteckt. Die Kopfteile 54 weisen zwei zylindrische Ansätze 56 auf, die in die Hülsen 52 eingeführt werden. Die beiden zylindrischen Ansätze 56 sind über ein brückenförmiges Element 58 miteinander verbunden, wobei das brückenförmige Element 58 einen Teil der Öffnung 42 (Fig. 6) zur Aufnahme des Sattelgestells 44 ausbildet.

Die Öffnung 42 wird sodann durch ein zweites Kopfteil 60 ausgebildet, dass ebenfalls brückenförmig ausgebildet ist und einen Ansatz 61 aufweist, der zwischen zwei gegenüberliegende Ansätze des ersten Brückenteils 54 ragt. Ferner weist das zweite Kopfteil 60 zwei Öffnungen 62 auf, in die die als Schrauben ausgebildeten Schwenkachsen 38 eingeführt werden. Hierbei ist es bevorzugt, dass das in Fig. 2 rechte (zweite) Kopfteil 60 in den entsprechenden Öffnungen 62 Gewinde aufweist. Im montierten Zustand entspricht das in Fig. 7 dargestellte Kopfelement im Wesentlichen, insbesondere hinsichtlich der Funktion, dem in den Figuren 5 und 6 dargestellten Kopfelemente 26.

## Patentansprüche

1. Sattelstütze für Fahrradsättel, insbesondere für Rennräder, mit einem Kopfelement (26) zur Verbindung mit einem Sattelelement (44), mindestens zwei mit dem Kopfelement (26) verbundenen Streben (10), deren rahmenseitiger Endbereich (12) in einem Sattelrohr (46) insbesondere klemmend fixierbar ist,
wobei
die Streben (10) in ihrem rahmenseitigen Endbereich (12) als Hohlprofil ausgebildet sind und
im rahmenseitigen Endbereich (12) aneinander anliegen,
**dadurch gekennzeichnet, dass**
zwischen Streben (10) im sattelseitigen Endbereich (18) ein Schlitz (20) vorgesehen ist.

2. Sattelstütze nach Anspruch 1, **dadurch gekennzeichnet, dass** die Streben (10) im rahmenseitigen Endbereich einen gemeinsamen Querschnitt aufweisen, der einer Querschnittsöffnung (50) des Sattelrohrs (46) entspricht.

3. Sattelstütze nach Anspruch 1 oder 2, **gekennzeichnet durch** genau zwei Streben (10), die an einer Kontaktfläche (16) aneinander anliegen, die vorzugsweise quer zur Rahmenlängsrichtung (34) und insbesondere über die gesamte Breite der Streben (10) verläuft.

4. Sattelstütze nach einem der Ansprüche 1 bis 3, **dadurch gekennzeichnet, dass** die Streben (10) im rahmenseitigen Endbereich (12) und im mittleren Bereich (14) im Wesentlichen denselben Querschnitt aufweisen und/oder in diesen Bereichen (10, 14) als insbesondere durchgängiges Hohlprofil ausgebildet sind.

5. Sattelstütze nach einem der Ansprüche 3 bis 4, **dadurch gekennzeichnet, dass** die Sattelstreben (10) im Bereich der Kontaktfläche (16) konvex gewölbt sind, wobei die Wölbung vorzugsweise in Längsrichtung der Streben (10) nur über einen Teilbereich vorgesehen ist.

6. Sattelstütze nach Anspruch 5, **dadurch gekennzeichnet, dass** die Kontaktfläche (16) in einem Teilbereich flach ausgebildet ist, wobei es sich vorzugsweise um den Teilbereich handelt, der das rahmenseitige Ende der Streben (10) ist.

7. Sattelstütze nach einem der Ansprüche 1 bis 6, **dadurch gekennzeichnet, dass** die Hohlprofile zumindest teilweise mit Materialien geringerer Dichte, wie aufgeschäumtes Kunststoffmaterial und/oder Wabenstrukturen, gefüllt sind.

8. Sattelstütze nach einem der Ansprüche 1 bis 7, **dadurch gekennzeichnet, dass** sich der Querschnitt zumindest einer Strebe im sattelseitigen Endbereich (18) verringert und/oder dass die Breite quer zur Rahmenlängsrichtung (34) zumindest mit einer Strebe (10) über ihre gesamte Länge im Wesentlichen konstant ist.

9. Sattelstütze nach einem der Ansprüche 3 bis 8, **dadurch gekennzeichnet, dass** die Kontaktfläche (16) zwischen den Streben (10) zumindest in Teilbereichen eine den Reibwert vergrößernde Oberfläche aufweist.

10. Sattelstütze nach einem der Ansprüche 1 bis 9, **dadurch gekennzeichnet, dass** die Streben aus Faserverbundwerkstoff mit vorzugsweise in Längsrichtung der Streben (10) verlaufenden Fasern hergestellt sind.

11. Sattelstütze nach einem der Ansprüche 1 bis 10, **dadurch gekennzeichnet, dass** die Streben (10) in den Bereichen (10, 14, 18), in denen sie als Hohlprofil ausgebildet sind, eine Wandstärke aufweisen, die im rahmenseitigen Endbereich (12) in Richtung des mittleren Bereichs (14) insbesondere konstant zunimmt und/oder im mittleren Bereich (14) in Richtung des sattelseitigen Endbereichs (18) insbesondere konstant abnimmt und/oder im sattelseitigen Endbereich (18) konstant ist.

12. Sattelstütze nach einem der Ansprüche 1 bis 11, **dadurch gekennzeichnet, dass** mindestens eine Strebe (10) am sattelseitigen Ende eine Verdickung (22) zur Verbindung mit einem Kopfteil (36) des Kopfelements (26) aufweist, wobei die Verdickung (22) vorzugsweise eine quer zur Rahmenlängsrichtung (34) angeordnete Öffnung (40) zur Aufnahme einer Schwenkachse (38) aufweist.

13. Sattelstütze nach Anspruch 12, **dadurch gekennzeichnet, dass** jedes Kopfteil (36) zur Verbindung mit einem Sattelelement (44) insbesondere zwei seitlich neben der Strebe (10) vorgesehene Fixierelemente aufweist, wobei die Fixierelemente vorzugsweise ausschließlich mit der Schwenkachse (38) verbunden sind.

14. Fahrradrahmen, insbesondere Rennrad-Rahmen, mit einem Oberrohr, einem Unterrohr, einem Sattelrohr (46) und einer Sattelstütze nach einem der Ansprüche 1 bis 13.

## Claims

1. A seatpost for bicycle saddles, particularly for use in racing bicycles, comprising
a head member (26) for connection to a saddle member (44),
at least two bars (10) connected to said head member (26), the frame-side end region (12) of said bars being adapted to be fixed in a saddle tube (46), particularly by clamping,
said bars (10) being formed as hollow profiles in their frame-side end regions (12), and
being arranged in mutual abutment in their frame-side end regions (12),
**characterized in that,**
in the saddle-side end region (18), a slot (20) is provided between bars (10).

2. The seatpost according to claim 1, **characterized in that** said bars (10) in their frame-side end regions have a common cross section corresponding to a cross-sectional opening (50) of said saddle tube (46).

3. The seatpost according to claim 1 or 2, **characterized by** exactly two bars (10) being arranged in mutual abutment on a contact face (16) extending preferably transversely to the longitudinal direction (34) of the frame and particularly along the whole width of the bars (10).

4. The seatpost according to any one of claims 1 to 3, **characterized in that** said bars (10) in their frame-side end region (12) and in their central region (14) substantially have the same cross section and/or are formed as a preferably continuous hollow profile in said regions (10,14).

5. The seatpost according to any one of claims 3 to 4, **characterized in that**, in the region of said contact face (16), said seat bars (10) are bulged in a convex shape, said bulge being preferably provided only along a partial region in the longitudinal direction of the bars (10).

6. The seatpost according to claim 5, **characterized in that**, in a partial region, said contact face (16) is flat, said partial region preferably being the partial region which is the frame-side end of the bars (10).

7. The seatpost according to any one of claims 1 to 6, **characterized in that** said hollow profiles are at least partially filled with materials of lower density, such as e.g. foamed plastic material and/or honeycomb structures.

8. The seatpost according to any one of claims 1 to 7, **characterized in that** the cross section of at least one bar tapers within the saddle-side end region (18) and/or that the width of at least one bar (10) transversely to the longitudinal direction (34) of the frame is substantially constant along the whole length of the bar.

9. The seatpost according to any one of claims 3 to 8, **characterized in that** said contact face (16) between the bars (10) at least in partial regions has a surface adapted to increase the friction value.

10. The seatpost according to any one of claims 1 to 9, **characterized in that** said bars are made of composite fiber material, its fibers preferably extending in the longitudinal direction of the bars (10).

11. The seatpost according to any one of claims 1 to 10, **characterized in that** said bars (10) in those regions (10,14,18) where they are formed as hollow profiles, have a wall thickness which in said frame-side end region (12) increases, preferably constantly, in the direction of said central region (14) and/or in said central region (14) decreases, preferably constantly, in the direction of said saddle-side end region (18), and/or is constant in said saddle-side end region (18).

12. The seatpost according to any one of claims 1 to 11, **characterized in that** at least one bar (10) on its saddle-side end comprises a thickened portion (22) for connection to a head portion (36) of said head member (26), wherein said thickened portion (22) preferably comprises an opening (40) extending transversely to the longitudinal direction (34) of the frame and provided to receive a pivot axis (38).

13. The seatpost according to claim 12, **characterized in that**, for connection to a saddle member (44), each head portion (36) comprises preferably two fixing elements arranged laterally of the bar (10), said fixing elements preferably being connected exclusively to said pivot axis (38).

14. A bicycle frame, particularly a racing bicycle frame, comprising a top tube, a down tube, a saddle tube (46) and a seatpost according to any one of claims 1 to 13.

## Revendications

1. Support de selle pour selles de bicyclette, notamment pour bicyclettes de course, avec
un élément de tête (26) pour la liaison avec un élément de selle (44), au moins deux barres (10) attachées à l'élément de tête (26), dont la zone d'extrémité (12) du côté du cadre de bicyclette est adaptée pour être fixée dans un tube pour selle (46), notamment par serrage, les barres (10) étant formées, dans la zone d'extrémité (12) du côté
du cadre de bicyclette, comme profilés creux et
étant adjacentes l'une à l'autre dans la zone d'extrémité (12) du côté du cadre de bicyclette,
**caractérisé en ce**
**qu'**une fente (20) est prévue entre les barres (10) dans la zone d'extrémité (18) du côté de la selle de bicyclette.

2. Support de selle selon la revendication 1, **caractérisé en ce que** les barres (10) présentent, dans la zone d'extrémité du côté du cadre de bicyclette, une section transversale commune qui correspond à une ouverture de section transversale (50) du tube pour selle (46).

3. Support de selle selon la revendication 1 ou 2, **caractérisé par** précisément deux barres (10) qui sont adjacentes l'une à l'autre à une surface de contact (16) qui s'étend de préférence transversalement à la direction longitudinale (34) du cadre de bicyclette et notamment sur la largeur totale des barres (10).

4. Support de selle selon l'une quelconque des revendications 1 à 3, **caractérisé en ce que** les barres (10) présentent, dans la zone d'extrémité (12) du côté du cadre de bicyclette et dans la zone médiane (14), sensiblement la même section transversale et/ou sont formées dans ces zones (10, 14) plus particulièrement comme profilé creux continu.

5. Support de selle selon l'une quelconque des revendications 3 à 4, **caractérisé en ce que** les barres de selle (10) sont cambrées de manière convexe dans la zone de la surface de contact (16), la cambrure étant prévue de préférence dans la direction longitudinale des barres (10) et seulement dans une zone partielle.

6. Support de selle selon la revendication 5, **caractérisé en ce que** la surface de contact (16) est plate dans une zone partielle, la zone partielle étant de préférence celle qui constitue l'extrémité des barres (10) du côté du cadre de bicyclette.

7. Support de selle selon l'une quelconque des revendications 1 à 6, **caractérisé en ce que** les profilés creux sont remplis au moins partiellement de matériaux de faible densité, tels que de la matière synthétique moussée et/ou à structure de nids d'abeille.

8. Support de selle selon l'une quelconque des revendications 1 à 7, **caractérisé en ce que** la section transversale d'au moins une barre diminue dans la zone d'extrémité (18) du côté de la selle et/ou **en ce que** la largeur transversalement à la direction longitudinale (34) du cadre de bicyclette est sensiblement constante sur toute sa longueur au moins avec une barre (10).

9. Support de selle selon l'une quelconque des revendications 3 à 8, **caractérisé en ce que** la surface de contact (16) présente entre les barres (10), au moins dans des zones partielles, une surface augmentant le coefficient de friction.

10. Support de selle selon l'une des revendications 1 à 9, **caractérisé en ce que** les barres sont réalisées en un matériau à base de fibres avec des fibres s'étendant de préférence dans la direction longitudinale des barres (10).

11. Support de selle selon l'une des revendications 1 à 10, **caractérisé en ce que** les barres (10) présentent, dans les zones (10,14,18) dans lesquelles elles sont formées comme profilés creux, une épaisseur de paroi qui augmente notamment de manière constante dans la zone d'extrémité (12) du côté du cadre de bicyclette en direction de la zone médiane (14) et/ou diminue notamment de manière constante dans la zone médiane (14) en direction de la zone d'extrémité (18) du côté de la selle et/ou est constante dans la zone d'extrémité (18) du côté de la selle.

12. Support de selle selon l'une quelconque des revendications 1 à 11, **caractérisé en ce qu'**au moins une barre (10) présente, à l'extrémité du côté de la selle, un épaississement (22) pour la liaison avec une partie de tête (36) de l'élément de tête (26), l'épaississement (22) présentant de préférence une ouverture (40) disposée transversalement à la direction longitudinale (34) du cadre de bicyclette, pour loger un axe de pivotement (38).

13. Support de selle selon la revendication 12, **caractérisé en ce que** chaque partie de tête (36) pour l'attachement à une élément de selle (44) comprend notamment deux éléments de fixation prévus latéralement à côté de la barre (10), les éléments de fixation étant rattachés de préférence exclusivement à l'axe de pivotement (38).

14. Cadre de bicyclette, notamment cadre de bicyclette de course, avec un tube supérieur, un tube inférieur, un tube pour selle (46) et un support de selle selon l'une quelconque des revendications 1 à 13.
